# EUROPEAN PATENT SPECIFICATION

(11) **EP 2 743 484 B1**
(45) Date of publication and mention of the grant of the patent: **22.04.2020**
(21) Application number: 13162681.4
(22) Date of filing: 08.04.2013
(51) Int. Cl.: F02D 41/02, F01N 3/08, F02D 41/14, F01N 11/00

(54) **LNT control method for vehicle**
LNT-Steuerungsverfahren für ein Fahrzeug
Procédé de commande de LNT pour véhicule

(30) Priority: 17.12.2012 KR 20120147882
(43) Date of publication of application: 18.06.2014
(73) Proprietor: HYUNDAI MOTOR COMPANY, Seoul 137-938 (KR)
(72) Inventor: Kim, Pil Seung, 426-729 Ansan-si (KR)
(74) Representative: Viering, Jentschura & Partner mbB Patent- und Rechtsanwälte

(56) References cited:
- EP-A2- 1 331 372
- DE-A1- 10 019 245
- DE-A1-102004 022 814
- DE-C1- 19 800 665
- GB-A- 2 342 597
- KR-A- 20110 063 140

## Description

### BACKGROUND OF INVENTION

### Field of Invention

The present invention relates to an LNT control method, and more particularly, a technology of controlling a rich mode due to deterioration of Lean NOx Trap (LNT) for purifying nitrogen oxides from an engine of a vehicle.

### Description of Related Art

When an LNT catalyst is used in the engine exhaustion system of a vehicle, a rich mode is performed to recycle sticking NOx. The LNT catalyst is exposed to high temperature over 600°C or deteriorated to sulfur poisoning due to combustion of sulfur in fuel, thus the purification rate of NOx gradually decreases.

As described above, since the purification rate of NOx depends on the degree of deterioration of the LNT catalyst, it is necessary to satisfy the limit of NOx and minimize the loss ratio of fuel efficiency by changing a rich mode control plan in accordance with the purification rate of NOx in LNT.

An exemplar of the prior art is Korean Patent Application Publication No. KR 10-2011-0063140 A. Further examples of LNT control methods are described in, e.g., DE 100 19 245 A1, DE 10 2004 022814 A1, GB 2 342 597 A and EP 1 331 372 A2.

The information disclosed in this Background section is only for enhancement of understanding of the general background of the invention and should not be taken as an acknowledgement or any form of suggestion that this information forms the prior art already known to a person skilled in the art.

### BRIEF SUMMARY

The present invention has been made effort to satisfy such necessities.

Various aspects of the present invention provide for an LNT control method for a vehicle which satisfies the limit of NOx and minimize the loss ratio of fuel efficiency by changing a rich mode control plan in accordance with the purification rate of NOx in LNT which changes in accordance with the degree of deterioration of an LNT catalyst.

Various aspects of the present invention provide for an LNT control method for a vehicle according to claim 1. Further exemplary embodiments are described in the dependent claims.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a block diagram illustrating an exemplary LNT control method for a vehicle according to the present invention;
FIG. 2 is a diagram showing examples of modeled NOx factors used in the present invention;
FIG. 3 is a diagram showing examples of vehicle speed & gear factors used in the present invention; and
FIG. 4 is a graph illustrating effects of the present invention relative to the related art.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the scope of the invention as defined by the appended claims.

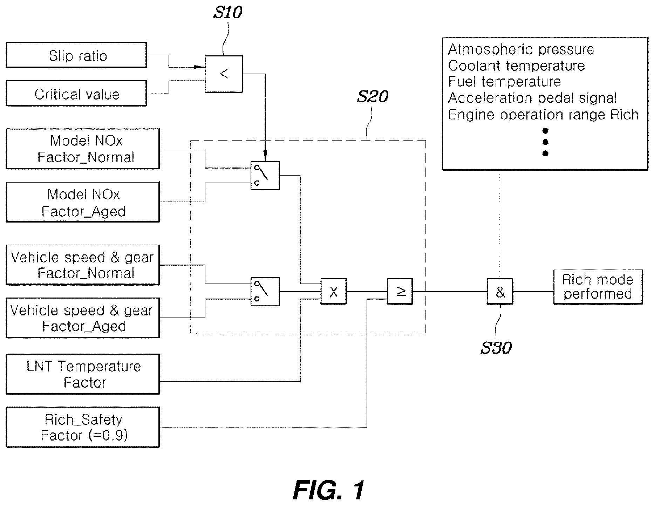

Referring to FIG. 1, an LNT control method for a vehicle according to various embodiments of the present invention includes: a deterioration determining step S10 that determines whether LNT is deteriorated; and a rich mode necessity determining step S20 that performs determination so that a rich mode may be performed more times in comparison with the case when LNT is not deteriorated, when determining that the LNT is deteriorated.

That is, it is determined that LNT is deteriorated by the deterioration determining step S10, a rich mode can be performed more frequently by the a rich mode necessity determining step S20, accordingly a limit of NOx can be satisfied, and when it is determined that LNT is not deteriorated, consumption of fuel is reduced by relatively decreasing the number of times of performing the rich mode, thereby contributing to improving fuel efficiency.

In the deterioration determining step S10, a slip ratio is calculated by detecting the amount of a reducer consumed in NOx reduction and the amount of a reducer slipping, using signals from lambda sensors at the front and rear ends of LNT, and it is determined that LNT has been deteriorated, when the calculated slip ratio exceeds a predetermined critical value, which determines that LNT has been deteriorated in accordance with that described in the prior art documents.

The rich mode necessity determining step S20 determines whether a rich mode of LNT is necessary, by multiplying NOx factors set based on values obtained by modeling the amount of NOx adsorbed to LNT by vehicle speed & gear factors set based on the vehicle speed and the number of gears and comparing that with a predetermined rich safe factors.

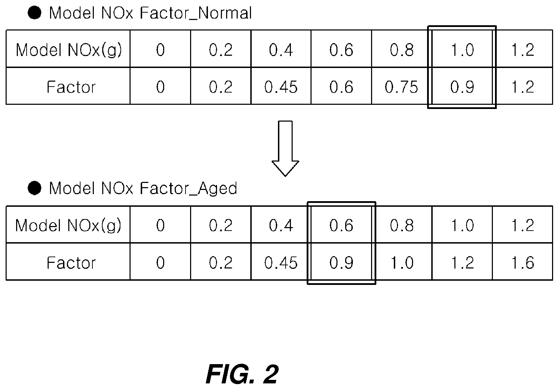

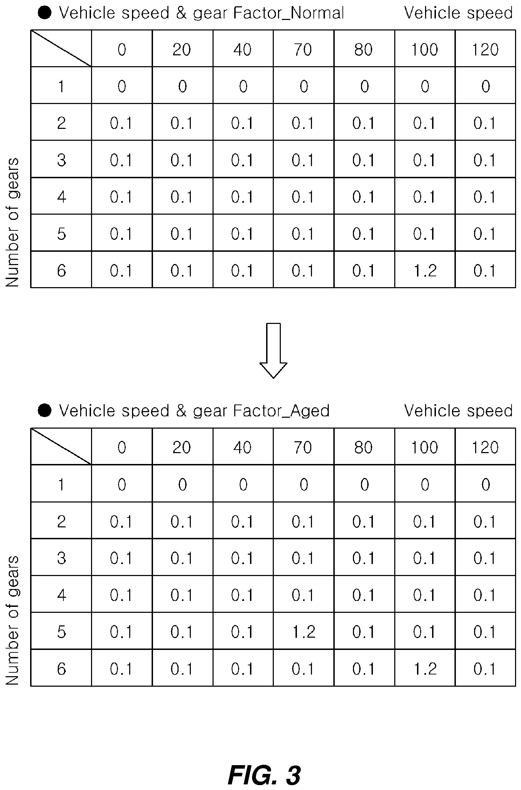

That is, the amount of NOx adsorbed to LNT is calculated by modeling NOx exhausted from an engine, the NOx factors are set in accordance with the amount of NOx, as shown in FIG. 2, and the vehicle speed & gear factors are set and inputted in advance in accordance with the vehicle speed and the number of gears, as exemplified in FIG. 3.

The NOx factors are composed of normal NOx factors determined for a normal state without LNT deteriorated and aged NOx factors specifically determined for the deteriorated state of LNT and the vehicle speed & gear factors are composed of normal vehicle & gear factors determined for a normal state without LNT deteriorated and aged vehicle speed & gear factors specifically determined for the deteriorated state of LNT.

The NOx factors have a tendency to increase in magnitude with the increase in the amount of NOx and the aged NOx factors are set to have a tendency to be relatively greater than the normal NOx factors.

The vehicle speed & gear factors have a tendency to increase with the increase in vehicle speed and the number of gears and the aged vehicle speed & gear factors are set to have a tendency to be relatively greater than the normal vehicle speed & gear factors.

In the rich mode necessity step, one of the normal NOx factors or the aged NOx factor and one of the normal vehicle speed & gear factors or the aged vehicle speed & gear factors are selected, multiplied, and then compared with the rich safe factors. In various embodiments, the result of multiplying the NOx factor with the vehicle speed & gear factors is additionally multiplied by an LNT temperature factors determined in accordance with the temperature of LNT and then the resultant is compared with the rich safe factors, and from the result, when the result of multiplying the NOx factors, the vehicle speed & gear factors, and LNT temperature factors are the rich safe factors or more, it is determined that the rich mode of LNT is necessary.

The purification rates of NOx are very different in accordance with the temperature of LNT, therefore the LNT temperature factors are provided in consideration of the differences, and for example, reduction of NOx is impossible under 200°C, so entrance to the rich mode is prohibited.

On the other hand, the vehicle speed & gear factors are provided to determine whether to enter the rich mode in accordance with the driving conditions of a vehicle, and they are set to prevent entrance to the rich mode, for example, at the first stage and at a speed of 10 Km/H or less.

On the other hand, the method may further include a final determining step S30 that determines whether to perform the rich mode of LNT by further determining one or more conditions of the atmospheric pressure, coolant temperature, fuel temperature, acceleration pedal signal, and engine operation range, when it is determined that it is necessary to perform the rich mode of LNT, from the result of performing the rich mode necessity determining step S20.

That is, although it is possible to determine whether to enter the rich mode merely according to the NOx factors, vehicle & gear factors, and LNT temperature factors, it may be possible to perform a more appropriate rich mode by further considering the atmospheric pressure, coolant temperature, fuel temperature, acceleration pedal signal, and engine operation range and determining whether to perform the rich mode actually in accordance with the considerations.

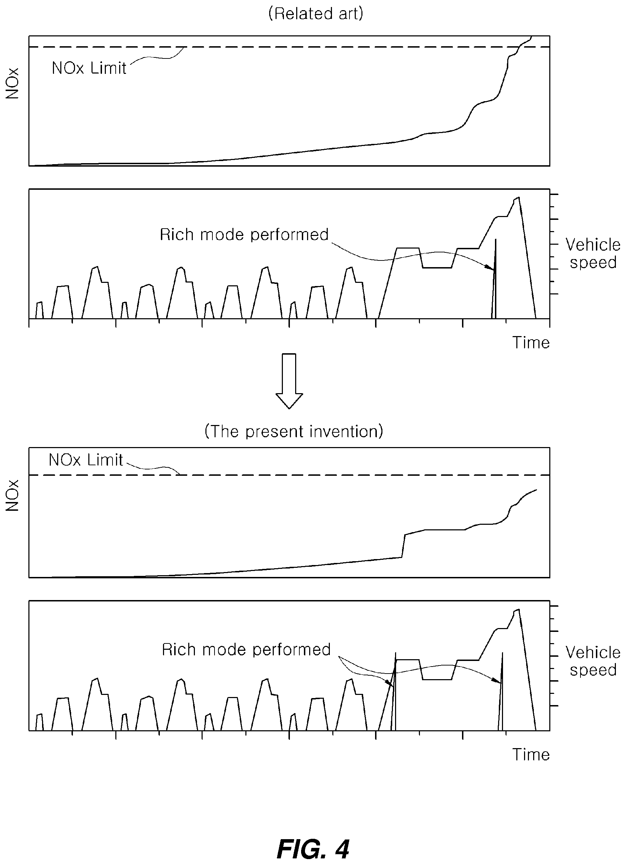

As described above, since whether to enter the rich mode is determined in accordance with the other conditions regardless of whether LNT has been deteriorated, it is difficult to expect sufficient purification of NOx with LNT deteriorated, thereby the limit may not be satisfied, and when the number of rich modes is unnecessarily increased without LNT deteriorated against this case, the fuel is unnecessarily wasted and fuel efficiency is adversely effected. However, according to the present invention, as exemplified in FIG. 4, the rich mode is more frequently performed in deterioration of LNT so that the limits of NOx may be satisfied, and when LNT is not deteriorated, the rich mode is less frequently performed to contribute to improving fuel efficiency of a vehicle.

For reference, the left side of FIG. 4 shows that it exceeds a limit of NOx by performing a rich mode one time, the same as when deterioration is not generated, even though LNT is deteriorated, and the right side shows that the limit of NOx can be satisfied by performing a rich mode two times in deterioration of LNT.

According to the present invention, it is possible to minimize the loss ratio of fuel efficiency while satisfying limits of NOx by changing a rich mode control plan in accordance with the purification rate of NOx in LNT which changes with the degree of deterioration of LNT catalyst.

For convenience in explanation and accurate definition in the appended claims, the terms front or rear, and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto.

## Claims

1. An LNT control method for a vehicle, comprising:
a deterioration determining step (S10) that determines whether LNT is deteriorated; and
a rich mode necessity determining step (S20) that performs determination so that a rich mode may be performed more times in comparison with the case when LNT is not deteriorated, when determining that the LNT is deteriorated,
wherein the rich mode necessity determining step (S20) determines whether a rich mode of LNT is necessary, by multiplying NOx factors set based on values obtained by modeling the amount of NOx adsorbed to LNT by vehicle speed & gear factors set based on the vehicle speed and the number of gears and comparing that with a predetermined rich safe factors,wherein the NOx factors are composed of normal NOx factors determined for a normal state without LNT deteriorated and aged NOx factors specifically determined for the deteriorated state of LNT, and
the vehicle speed & gear factors are composed of normal vehicle & gear factors determined for a normal state without LNT deteriorated and aged vehicle speed & gear factors specifically determined for the deteriorated state of LNT, and
in the rich mode necessity step (S20), one of the normal NOx factors or the aged NOx factor and one of the normal vehicle speed & gear factors or the aged vehicle speed & gear factors are selected, multiplied, and then compared with the rich safe factors.

2. The method of claim 1, wherein, in the rich mode necessity step (S20), the result of multiplying the NOx factor with the vehicle speed & gear factors is additionally multiplied by an LNT temperature factors determined in accordance with the temperature of LNT and then the resultant is compared with the rich safe factors, and from the result, when the result of multiplying the NOx factors, the vehicle speed & gear factors, and LNT temperature factors is the rich safe factors or more, it is determined that the rich mode of LNT is necessary.

3. The method of claim 1, wherein the NOx factors have a tendency to increase in magnitude with the increase in the amount of NOx and the aged NOx factors are set to have a tendency to be relatively greater than the normal NOx factors, and
the vehicle speed & gear factors have a tendency to increase with the increase in vehicle speed and the number of gears and the aged vehicle speed & gear factors are set to have a tendency to be relatively greater than the normal vehicle speed & gear factors.

4. The method of claim 1, further includes a final determining step (S30) that determines whether to perform the rich mode of LNT by further determining one or more conditions of the atmospheric pressure, coolant temperature, fuel temperature, acceleration pedal signal, and engine operation range, when it is determined that it is necessary to perform the rich mode of LNT, from the result of performing the rich mode necessity determining step.

5. The method of claim 1, wherein, in the deterioration determining step (S10), a slip ration is calculated by detecting the amount of a reducer consumed in NOx reduction and the amount of a reducer slipping, using signals from lambda sensors at the front and rear ends of LNT, and it is determined that LNT has been deteriorated, when the calculated slip ratio exceeds a predetermined critical value.

## Patentansprüche

1. Ein LNT-Steuerungsverfahren für ein Fahrzeug, aufweisend:
einen Verschlechterungsermittlungsschritt (S10), welcher ermittelt, ob ein LNT verschlechtert ist, und
einen Fetter-Modus-Notwendigkeitsermittlungsschritt (S20), welcher eine Ermittlung durchführt, so dass, wenn ermittelt wird, dass der LNT verschlechtert ist, ein fetter Modus mehrfach im Vergleich zu dem Fall, wenn der LNT nicht verschlechtert ist, durchgeführt werden kann,
wobei der Fetter-Modus-Notwendigkeitsermittlungsschritt (S20) ermittelt, ob ein fetter Modus eines LNT notwendig ist, indem NOx-Faktoren, welche basierend auf Werten, die durch Modellieren der durch den LNT adsorbierten Menge an NOx gesetzt sind, mit Fahrzeuggeschwindigkeit-&-Gang-Faktoren, welche auf Grundlage der Fahrzeuggeschwindigkeit und der Anzahl an Gängen gesetzt sind, multipliziert werden und dies mit einem vorbestimmten Fett-Sicher-Faktor verglichen wird, wobei die NOx-Faktoren aus Normal-NOx-Faktoren, die für einen Normalzustand ohne Verschlechterung des LNT bestimmt sind, und Gealtert-NOx-Faktoren, die speziell für den verschlechterten Zustand des LNT bestimmt sind, gebildet sind, und
die Fahrzeuggeschwindigkeit-&-Gang-Faktoren aus Normal-Fahrzeuggeschwindigkeit-&-Gang-Faktoren, die für einen Normalzustand ohne Verschlechterung des LNT bestimmt sind, und Gealtert-Fahrzeuggeschwindigkeit-&-Gang-Faktoren, die speziell für den verschlechterten Zustand des LNT bestimmt sind, gebildet sind, und
in dem Fetter-Modus-Notwendigkeitsermittlungsschritt (S20), einer von den Normal-NOx-Faktoren oder den Gealtert-NOx-Faktoren und einer von den Normal-Fahrzeuggeschwindigkeit-&-Gang-Faktoren oder den Gealtert-Fahrzeuggeschwindigkeit-&-Gang-Faktoren ausgewählt, multipliziert und dann mit den Fett-Sicher-Faktoren verglichen werden.

2. Das Verfahren nach Anspruch 1, wobei, in dem Fetter-Modus-Notwendigkeitsermittlungsschritt (S20), das Ergebnis des Multiplizierens des NOx-Faktors mit den Fahrzeuggeschwindigkeit-&-Gang-Faktoren zusätzlich multipliziert wird mit einem LNT-Temperatur-Faktor, welcher gemäß der Temperatur des LNT bestimmt ist, und dann das Ergebnis verglichen wird mit den Fett-Sicher-Faktoren, und wobei aus dem Ergebnis, wenn das Ergebnis der des Multiplizierens der NOx-Faktoren, der Fahrzeuggeschwindigkeit-&-Gang-Faktoren und der LNT-Temperatur-Faktoren den Fett-Sicher-Faktoren oder mehr entspricht, ermittelt wird, dass der fette Modus des LNT notwendig ist.

3. Das Verfahren nach Anspruch 1, wobei die NOx-Faktoren eine Tendenz dazu haben, sich in ihrer Höhe mit einer Erhöhung der NOx-Menge zu erhöhen, und die Gealtert-NOx-Faktoren gesetzt sind, so dass sie eine Tendenz dazu haben, im Verhältnis größer als die Normal-NOx-Faktoren zu sein, und
die Fahrzeuggeschwindigkeit-&-Gang-Faktoren eine Tendenz dazu haben, sich mit einer Erhöhung der Fahrzeuggeschwindigkeit und der Zahl an Gängen zu erhöhen, und die Gealtert-Fahrzeuggeschwindigkeit-&-Gang-Faktoren gesetzt sind, so dass sie eine Tendenz dazu haben, im Verhältnis größer als die Normal-Fahrzeuggeschwindigkeit-&-Gang-Faktoren zu sein.

4. Das Verfahren nach Anspruch 1, welche ferner aufweist einen finalen Ermittlungsschritt (S30), welcher ermittelt, ob der fette Modus des LNT durchzuführen ist, indem ferner eine oder mehrere Bedingungen des Atmosphärendrucks, der Kühlmitteltemperatur, Kraftstofftemperatur, des Fahrpedalsignals und Motorbetriebsbereichs ermittelt werden, wenn aus dem Ergebnis des Durchführens des Fetter-Modus-Notwendigkeitsermittlungsschritt (S20) heraus ermittelt wird, dass es notwendig ist, den fetten Modus des LNT durchzuführen.

5. Das Verfahren nach Anspruch 1, wobei, in dem Verschlechterungsermittlungsschritt (S10), ein Schlupfverhältnis berechnet wird, indem die Menge eines Reduktionsmittels, welches bei der NOx-Reduktion konsumiert wird, und die Menge eines Reduktionsmittels-Schlupfs unter Verwendung von Signalen von Lambda-Sensoren am vorderen und hinteren Ende des LNT detektiert werden, und ermittelt wird, dass der LNT sich verschlechtert hat, wenn das berechnete Schlupfverhältnis einen vorbestimmten kritischen Wert übersteigt.

## Revendications

1. Procédé de commande d'un piège à NOx pour un véhicule, comprenant :
une étape de détermination d'une détérioration (S10) qui consiste à déterminer si un piège à NOx est détérioré ; et
une étape de détermination de la nécessité d'un mode riche (S20) qui consiste à effectuer une détermination de sorte qu'un mode riche puisse être mis en œuvre plus souvent que dans le cas où le piège à NOx n'est pas détérioré, lorsqu'il s'avère que le piège à NOx est détérioré,
dans lequel l'étape de détermination de la nécessité du mode riche (S20) consiste à déterminer si un mode riche du piège à NOx est nécessaire, en multipliant des facteurs d'émission de NOx établis sur la base de valeurs obtenues en modélisant la quantité de NOx absorbée dans le piège à NOx par des facteurs de vitesse du véhicule et de rapports établis sur la base de la vitesse du véhicule et du nombre de rapports et en comparant cela avec des facteurs de sécurité riches prédéterminés, dans lequel les facteurs d'émission de NOx se composent de facteurs d'émission de NOx normaux déterminés pour un état normal sans détérioration du piège à NOx et de facteurs d'émission de NOx vieillis déterminés spécifiquement pour l'état détérioré du piège à NOx, et
les facteurs de vitesse du véhicule et de rapports se composent de facteurs de vitesse du véhicule et de rapports normaux déterminés pour un état normal sans détérioration du piège à NOx et de facteurs de vitesse du véhicule et de rapports vieillis déterminés spécifiquement pour l'état détérioré du piège à NOx, et
à l'étape de détermination de la nécessité du mode riche (S20), on sélectionne soit les facteurs d'émission de NOx normaux, soit les facteurs d'émission de NOx vieillis et soit les facteurs de vitesse du véhicule et de rapports normaux, soit les facteurs de vitesse du véhicule et de rapports vieillis, on les multiplie, puis on les compare aux facteurs de sécurité riches.

2. Procédé selon la revendication 1, dans lequel, à l'étape de détermination de la nécessité du mode riche (S20), on multiplie en outre le résultat de la multiplication du facteur d'émission de NOx par les facteurs de vitesse du véhicule et de rapports par des facteurs de température du piège à NOx déterminés en fonction de la température du piège à NOx, puis on compare le résultat avec les facteurs de sécurité riches, et à partir du résultat, lorsque le résultat de la multiplication des facteurs d'émission de NOx, des facteurs de vitesse du véhicule et de rapports, et des facteurs de température du piège à NOx est supérieur ou égal aux facteurs de sécurité riches, on détermine que le mode riche du piège à NOx est nécessaire.

3. Procédé selon la revendication 1, dans lequel les facteurs d'émission de NOx ont tendance à augmenter en magnitude au fur et à mesure que la quantité de NOx augmente et les facteurs d'émission de NOx vieillis sont fixés pour avoir tendance à être relativement supérieurs aux facteurs d'émission de NOx normaux, et
les facteurs de vitesse du véhicule et de rapports ont tendance à augmenter au fur et à mesure que la vitesse du véhicule et le nombre de rapports augmentent et les facteurs de vitesse du véhicule et de rapports vieillis sont fixés pour avoir tendance à être relativement supérieurs aux facteurs de vitesse du véhicule et de rapports normaux.

4. Procédé selon la revendication 1, comprenant en outre une étape de détermination finale (S30) qui consiste à déterminer s'il faut appliquer ou non le mode riche du piège à NOx en déterminant en outre une ou plusieurs conditions parmi la pression atmosphérique, la température du liquide de refroidissement, la température du carburant, le signal de la pédale d'accélération et la plage de fonctionnement du moteur, lorsqu'il s'avère nécessaire d'appliquer le mode riche du piège à NOx, d'après le résultat d'exécution de l'étape de détermination de la nécessité du mode riche.

5. Procédé selon la revendication 1, dans lequel, à l'étape de détermination d'une détérioration (S10), on calcule un rapport de glissement en détectant la quantité d'un réducteur consommé dans la réduction des NOx et le degré de glissement du réducteur, à l'aide de signaux provenant de capteurs lambda situés aux extrémités avant et arrière du piège à NOx, et on détermine que le piège à NOx est détérioré, lorsque le rapport de glissement calculé dépasse une valeur critique prédéterminée.
